# EUROPÄISCHE PATENTANMELDUNG

(11) **EP 1 686 775 A1**
(43) Veröffentlichungstag der Anmeldung: **02.08.2006**
(21) Anmeldenummer: 05001797.9
(22) Anmeldetag: 28.01.2005
(51) Int. Cl.: H04M 1/725, G06F 1/00

(54) **System und Verfahren zur Lizenzierung von Funktionalitäten in Telekommunikationsendgeräten**

(71) Anmelder: SIEMENS AKTIENGESELLSCHAFT, 80333 München (DE)
(72) Erfinder: Müller, Friedrich, 81925 München (DE); Purschke, Frank, 81927 München (DE); Schneider-Hufschmidt, Matthias, Dr., 80997 München (DE)

(57) **Zusammenfassung**

Die Erfindung betrifft ein Verfahren zur Lizenzierung von Endgerätefunktionalitäten sowie ein zugehöriges Telekommunikationsendgerät, wobei eine vorinstallierte Endgerätefunktionalität ausgewählt wird (S1), eine zugehörige Endgerätefunktionalitäts-Kennung erfasst und an einen Lizenz-Verwaltungsserver übertragen wird (S3), ein Eintrag der Endgerätefunktionalitäts-Kennung in einer Lizenz-Datenbank durchgeführt wird (S5) und auf der Grundlage der in die Lizenz-Datenbank eingegebenen Endgerätefunktionalitäts-Kennung eine Freigabe der ausgewählten Endgerätefunktionalität durchgeführt wird (S6, S7).

## Beschreibung

Die vorliegenden Erfindung bezieht sich auf ein Verfahren zur Lizenzierung von Endgerätefunktionalitäten sowie ein zugehöriges Telekommunikationsendgerät und insbesondere auf ein Verfahren zur Lizenzierung von Software-Applikationen in mobilen Telekommunikationsendgeräten.

Insbesondere multimediafähige Telekommunikationsendgeräte wie beispielsweise Handys, Mobiltelefone, schnurlose Telefone, Settopboxen, PDAs (Personal Digital Assistant), Smartphones usw. werden mit immer neuen Leistungsmerkmalen bzw. Endgerätefunktionalitäten versehen. Diese Endgerätefunktionalitäten, welche üblicherweise Software-Applikationen darstellen, werden jedoch nur von einem Teil der Benutzer dieser Endgeräte gewollt oder gebraucht. Für den Gerätehersteller ergibt sich damit ein Kostenproblem, da nicht nur das Entwickeln und Implementieren dieser Endgerätefunktionalitäten beträchtliche Kosten verursacht, sondern auch für Patent-, Software- und Urheberrechts-Lizenzen zusätzliche Stückkosten in nicht unbeträchtlicher Höhe anfallen.

Bisher wurde eine Differenzierung der Endgeräte je nach Umfang ihrer Leistungsmerkmale bzw. Endgerätefunktionalitäten durchgeführt, was jedoch zu einer sehr großen Anzahl von unterschiedlichen Gerätevarianten führt und somit den kostensenkenden Stückzahleffekt wieder zunichte macht. Darüber hinaus sind auch in den angebotenen Gerätevarianten immer noch eine Vielzahl von Funktionalitäten enthalten, die die jeweiligen Benutzer nicht verwenden.

In jüngerer Zeit wird daher verstärkt nach Möglichkeiten gesucht, eine Lizenzierung von Endgerätefunktionalitäten an deren tatsächlichem Nutzungsumfang zu orientieren. Neben den vorstehend beschriebenen sogenannten "prepaid licenses" werden daher zunehmend sogenannte "usage based licenses" eingesetzt. Bei herkömmlichen benutzungsbasierten Lizenzierungs-verfahren bzw. "usage based license"-Verfahren wird üblicherweise eine Protokolldatei hinsichtlich des Nutzungsverhaltens im Endgerät angelegt und anschließend in vorbestimmten Zeitabständen einem jeweiligen Dienstanbieter übermittelt, um eine Vergebührung zu ermöglichen. Zur Vermeidung von Manipulationen benötigen derartige benutzungsbasierte Lizenzierungs-verfahren eine aufwändige Bearbeitung der Protokolldateien sowie zusätzliche Sicherheitsvorkehrungen im Endgerät.

Der Erfindung liegt daher die Aufgabe zu Grunde, ein Verfahren zur Lizenzierung von Endgerätefunktionalitäten sowie ein zugehöriges Telekommunikationsendgerät zu schaffen, welches stark vereinfacht ist und keine Möglichkeiten zur Manipulation bietet.

Erfindungsgemäß wird diese Aufgabe hinsichtlich des Verfahrens durch die Maßnahmen des Patentanspruchs 1 und hinsichtlich des Telekommunikationsendgeräts durch die Merkmale des Patentanspruchs 15 gelöst.

Insbesondere durch das Auswählen einer Funktionalität aus einer Vielzahl von vorinstallierten Endgerätefunktionalitäten, dem Erfassen einer Endgerätefunktionalitäts-Kennung sowie dem Übertragen dieser Kennung an einen Lizenz-Verwaltungsserver, dem Eintragen der Endgerätefunktionalitäts-Kennung in einer Lizenzdatenbank und dem Freigeben der ausgewählten Endgerätefunktionalität auf der Grundlage der in die Lizenz-Datenbank eingegebenen Kennung findet die Protokollierung der lizenzrelevanten Benutzung von Endgerätefunktionalitäten stets außerhalb des Endgeräts statt, wodurch eine Manipulation von Daten zuverlässig verhindert ist.

Vorzugsweise erfolgt eine Vergebührung der benutzten Endgerätefunktionalitäten auf der Grundlage der in die Lizenz-Datenbank eingegebenen Kennungen. Auf diese Weise können Lizenzzahlungen für bestimmte Endgeräte wesentlich verringert werden, da nur diejenigen Endgeräte, deren Benutzer eine bestimmte Funktionalität nutzen als lizenzpflichtig registriert werden.

Vorzugsweise kann die Lizenz-Vergebührung gegenüber einem Endgerätebenutzer, einem Netzbetreiber, einem Endgerätehersteller und/oder einem Dienstanbieter durchgeführt werden. Auf diese Weise lässt sich ohne für den Benutzer bemerkbar z.B. ein sogenanntes Sponsoring realisieren, wobei man eine flexible Vergebührung erhält.

Als Endgerätefunktionalitäts-Kennung wird eine Endgeräte-Kennung zum eindeutigen Identifizieren eines Endgeräts und eine Funktionalitäts-Kennung zum eindeutigen Identifizieren eines Funktionalitätstyps bzw. einer Software-Applikation erfasst und übertragen. Zusätzlich kann eine Kontext-Kennung zum eindeutigen Identifizieren von aktuellen Endgeräte-Kontexten erfasst und übertragen werden, wobei insbesondere eine Zeitpunkt-Kennung, eine Orts-Kennung und eine Netzbetreiber-Kennung verwendet werden kann. Die Vergebührungsmöglichkeiten können dadurch weiter verbessert werden, da insbesondere in Abhängigkeit von einem jeweiligen Zeitpunkt, einem jeweiligen Endgeräte-Ort oder einem jeweiligen Netzbetreiber eine Lizenzierung einer Endgerätefunktionalität erfolgt und diese für den Benutzer freigegeben wird.

Die Freigabe der ausgewählten Endgerätefunktionalität erfolgt insbesondere durch Übertragen eines Freischaltcodes an ein ausgewähltes Endgerät, wobei die Funktionsaktivierung zum Aktivieren der Endgerätefunktionalität auf der Grundlage des Freischaltcodes durchgeführt wird. Vorzugsweise wird dieser Freischaltcode in einem mobilen Netzwerk mittels einer SMS-Nachricht, eines Sync_ML-, eines WAP-Push-Verfahrens oder einer proprietären Signalisierung des Systems verschlüsselt bzw. kryptografisch übertragen, wobei die Freigabe durch Setzen eines Aktivierungsbits vorzugsweise in einem gesicherten Datenfeld erfolgt. Auf diese Weise erhält man ein gegenüber Manipulationen besonders gesichertes Lizenzierungs-Verfahren, welches in einem Endgerät mit minimalem Aufwand zu realisieren ist.

Obwohl unter Endgerätefunktionalitäten üblicherweise Software-Applikationen wie beispielsweise Decoder/Encoder (MP3-, MPEG-Player usw.) zu verstehen sind, können auch andere Endgerätefunktionalitäten und insbesondere ein Garantiezertifikat für das Endgerät sehr einfach und manipulationssicher freigeschaltet werden. Das Erfassen bzw. Registrieren von Garantie- und Gewährleistungsansprüchen wird dadurch wesentlich vereinfacht.

Hinsichtlich des Telekommunikationsendgeräts wird neben einer Kommunikationsschnittstelle zur Anbindung des Endgeräts an ein Telekommunikationsnetzwerk mit einem Lizenz-Verwaltungsserver, und einer Datenverarbeitungseinheit zur Realisierung der vorinstallierten aber noch gesperrten Gerätefunktionalitäten eine Lizenz-Aktivierungseinheit vorgesehen, die für eine noch nicht freigegebene Endgerätefunktionalität eine Auswahl ermöglicht, eine zugehörige Endgerätefunktionalitäts-Kennung erfasst, die Kennung über die Schnittstelle und das Telekommunikationsnetzwerk an den Lizenz-Verwaltungsserver zum Eintragen in eine Lizenz-Datenbank überträgt und in Abhängigkeit von einem empfangenen Freischaltcode die ausgewählte Endgerätefunktionalität aktiviert. Der größte Teil der sensiblen Datenbereiche liegt demzufolge außerhalb des Endgeräts und kann vor Manipulationen zuverlässig geschützt werden.

In den weiteren Unteransprüchen sind weitere vorteilhafte Ausgestaltungen der Erfindung gekennzeichnet.

Die Erfindung wird nachstehend anhand eines Ausführungsbeispiels unter Bezugnahme auf die Zeichnung näher beschrieben.

Es zeigen:
Figur 1 ein vereinfachtes Blockschaltbild zur Veranschaulichung eines an ein Telekommunikationsnetzwerk angeschlossenen Telekommunikationsendgeräts zur Realisierung des erfindungsgemäßen Verfahrens;
Figur 2 eine vereinfachte Darstellung eines Statusdiagramms des erfindungsgemäßen Verfahrens; und
Figur 3 eine vereinfachte Darstellung eines Flussdiagramms des erfindungsgemäßen Verfahrens.

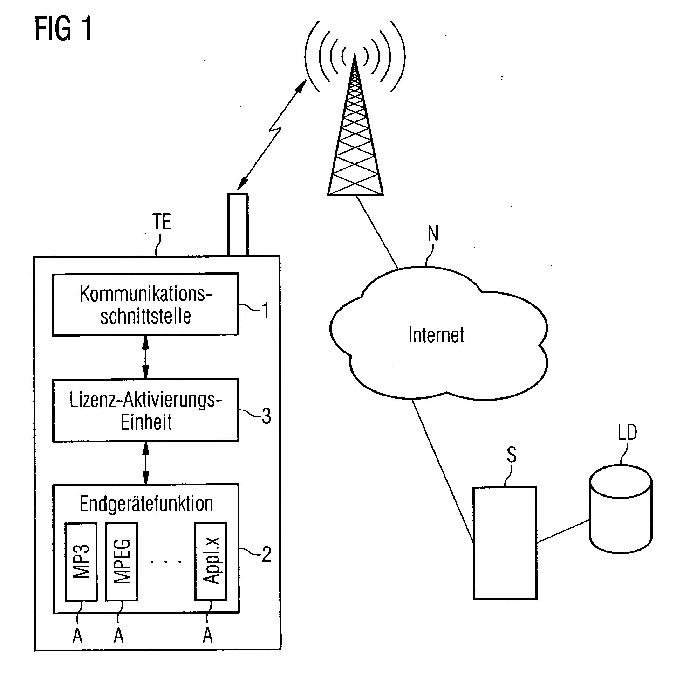

Figur 1 zeigt ein vereinfachtes Blockschaltbild eines Telekommunikationssystems mit einem erfindungsgemäßen Telekommunikationsendgerät TE zur Realisierung des erfindungsgemäßen Verfahrens zur Lizenzierung von Endgerätefunktionalitäten.

Die vorliegende Erfindung wird nachfolgend anhand eines mobilen Telekommunikationsendgeräts TE wie beispielsweise eines Handys, Mobiltelefons, Schnurlostelefons oder Smartphones bzw. PDAs (Personal Digital Assistant) mit Funkschnittstelle beschrieben, welches über eine Funkschnittstelle mit einem Telekommunikationsnetzwerk N wie beispielsweise dem Internet verbunden ist. An das Telekommunikationsnetzwerk N angeschlossen bzw. darin enthalten ist ferner ein Lizenz-Verwaltungsserver S, der in einer Lizenz-Datenbank LD lizenzrelevante Daten ablegt.

Selbstverständlich können alternativ zu dem dargestellten mobilen Telekommunikationsendgerät auch drahtgebundene Telekommunikationsendgeräte verwendet werden, wie beispielsweise ISDN-Telefone, Settopboxen, PCs usw., die über eine drahtgebundene Schnittstelle wie beispielsweise ein analoge oder digitale Telefonleitung an ein entsprechendes Netzwerk angeschaltet sind.

Gemäß Figur 1 weist das mobile Telekommunikationsendgerät TE zumindest eine Kommunikationsschnittstelle 1 zur Realisierung einer Anbindung an das Telekommunikationsnetzwerk N mit dem darin befindlichen Lizenz-Verwaltungsserver S auf. Ferner weist das mobile Telekommunikationsendgerät TE eine Datenverarbeitungseinheit 2 zur Realisierung einer Vielzahl von vorzugsweise bereits vorinstallierten Endgerätefunktionalitäten bzw. Software-Applikationen A auf. Derartige Software-Applikationen bzw. Endgerätefunktionalitäten sind beispielsweise lizenzpflichtige Spiele und Audio- oder Video-Kodierer/Dekodierer zum Erzeugen oder Abspielen von Audio-oder Video-Dateien, wie sie beispielsweise als "MP3-Player" oder "MPEG-Player" bekannt sind. Selbstverständlich sind eine Vielzahl von weiteren Endgerätefunktionalitäten bzw. lizenzpflichtigen Software-Applikationen in gleicher Weise denkbar, die beispielsweise eine Zusatz-Funktionalität des mobilen Telekommunikationsendgeräts bzw. Handys TE ermöglichen.

Neben diesen üblicherweise in jedem mobilen Telekommunikationsendgerät TE vorhandenen Einheiten besitzt das erfindungsgemäße Telekommunikationsendgerät ferner eine Lizenz-Aktivierungseinheit 3, die für eine noch nicht freigegebene Endgerätefunktionalität eine Auswahl ermöglicht, eine Endgerätefunktionalitäts-Kennung für die ausgewählte Funktionalität erfasst, die Kennung über die Schnittstelle 1 und das Telekommunikationsnetzwerk N zum Lizenz-Verwaltungsserver S überträgt, welcher daraufhin einen Eintrag in der Lizenz-Datenbank LD durchführt. In Abhängigkeit von diesem Eintrag wird ein Freischaltcode vom Lizenz-Verwaltungsserver S über das Telekommunikationsnetzwerk N an das Telekommunikationsendgerät TE übertragen und von dort von der Kommunikationsschnittstelle 1 an die Lizenz-Aktivierungseinheit 3 zur Aktivierung der ausgewählten Endgerätefunktionalität weitergeleitet.

Wenn demzufolge ein Benutzer des Telekommunikationsendgeräts TE, welches z.B. als für das Erzeugen/Abspielen von Dateien mit lizenzpflichtigen Kodieren/Dekodieren vorbereitetes Gerät in den Handel gebracht und von ihm erworben wurde und erstmalig dafür benutzt werden soll, eine solche Datei abspielen oder erzeugen will, erhält der Benutzer beispielsweise zunächst eine Aufforderung bestimmten nachlesbaren Lizenzbedingungen zuzustimmen. Nach einer derartigen optionalen Bestätigung wird automatisch eine Nachricht wie z.B. eine SMS für die Endgerätefunktionalitäts-Kennung erzeugt, die z. B. eine Geräteidentifikation (z.B. IMEI, International Mobile Equipment Identity) sowie den Typ der erforderlichen Lizenz (z.B. MP3-Dekoder) enthält. Ein "Weiter" wird gegebenenfalls mit einem sogenannten Soft Key bestätigt, was die Absendung der SMS-Nachricht an eine im Endgerät bereits vorab gespeicherte Adresse auslöst.

Der Lizenz-Verwaltungsserver S im Netzwerk N, welcher sich beispielsweise im Eigentum des Endgeräteherstellers oder des Netzbetreibers oder eines Serviceproviders befindet, wertet diese Nachricht aus und erhöht beispielsweise den Wert eines dem Funktionalitätstyp zugeordneten Lizenzzählers in der Lizenz-Datenbank LD um den Wert "1". Ist dies erfolgt, kann automatisch eine Antwort als vorzugsweise verschlüsselte Nachricht mit dem Freischaltcode und gegebenenfalls der Geräteidentifikation (IMEI) erzeugt werden, welche wiederum beispielsweise eine SMS-Nachricht darstellt.

Endgeräteseitig kann diese SMS-Nachricht beispielsweise im SIM (Subscriber Identification Module) entschlüsselt werden. Vorzugsweise wird diese Kommunikation zwischen der SIM-Karte und dem Endgerät bzw. Handy TE gesichert abgewickelt (U-SIM). Nach einem optionalen erneuten Gegencheck beispielsweise der zusätzlich übertragenen Geräteidentifikationsnummer IMEI gibt anschließend die Aktivierungseinheit 3 aufgrund des entschlüsselten Freischaltecodes die entsprechende Funktionalität im Handy TE frei.

Obwohl im einfachsten Fall eine Freigabe zeitlich unbegrenzt erfolgt, kann die Freischaltung auch zeitlich begrenzt oder nutzerbezogen oder SIM-bezogen erfolgen. Optional kann die Freischaltung auch nur nach Eingabe eines Endgeräte-PIN erfolgen, der nicht zu verwechseln ist mit dem SIM-PIN. Vorzugsweise erfolgt die Freischaltung in einem weitgehend gegen Fremdeinwirkung gesicherten Speicherbereich wie beispielsweise einem gesicherten Datenfeld, wobei vorzugsweise nur ein einziges sogenanntes "Aktivierungsbit" gesetzt oder rückgesetzt wird. Insbesondere sollte die Freischaltung gegen Software-Updates resistent und SIM-neutral sein, um unerwünschte Manipulationen zuverlässig zu verhindern. Der in der Lizenz-Datenbank hochgezählte Lizenzzähler, der einer jeweiligen Funktionalität zugeordnet werden kann, kann daraufhin zur Abrechnung bzw. Vergebührung der Lizenzgebühren mit dem Lizenzgeber verwendet werden. Durch die permanente Speicherung der Freischaltungsinformation kann beispielsweise sichergestellt werden, dass eine Freischaltung auch nach durchgeführten Software-Update bestehen bleibt.

Obwohl die Vergebührung üblicherweise direkt beim Endgerätehersteller oder Netzbetreiber durchgeführt wird, kann eine vollständige oder teilweise Weiterverrechnung der Lizenzgebühren auch an den Endgerätebenutzer und/oder einen jeweiligen Dienstanbieter durchgeführt werden. Hierzu könnte die Schnittstelle des Netzbetreiber-Abrechnungssystems verwendet werden. Im einfachsten Fall kann jedoch eine Weiterverrechnung dieser Gebühren entfallen, wobei dem Endkunden keine Lizenzgebühren berechnet werden. Selbst in diesem ungünstigen Fall sind für den Endgerätehersteller noch wesentliche Kosteneinsparungen zu erwarten.

Neben der verschlüsselten oder unverschlüsselten Übertragung der Endgerätefunktionalitäts-Kennung und des Freischaltcodes über SMS können auch alternative Übertragungs-Verfahren angewendet werden. Insbesondere seien hierbei sogenannte WAP-Push-Verfahren, Sync_ML-Verfahren, I_Mode-Verfahren, Verfahren zur proprietären Signalisierung des Systems oder Verfahren nach dem so genannten "Digital Rights Management" wie z.B. OMA Version 1.0 denkbar.

Zur Realisierung eines wesentlich komplexeren Lizenzierungsverfahrens können ferner sogenannte Kontext-Kennungen zum eindeutigen Identifizieren von aktuellen Endgeräte-Kontexten erfasst und an den Lizenz-Verwaltungsserver S zusätzlich übertragen werden. Derartige Endgeräte-Kontexte sind beispielsweise eine Zeitpunkt-Kennung zum eindeutigen Identifizieren eines Auswahlzeitpunktes, eine Orts-Kennung zum eindeutigen Identifizieren eines Endgerätestandortes oder eine Netzbetreiber-Kennung zum eindeutigen Identifizieren eines aktuellen Netzbetreibers. Insbesondere bei mobilen Telekommunikationsendgeräten mit ständig wechselnden Standorten und Netzbetreibern unter Umständen in verschiedenen Ländern können auf diese Weise auch komplexe Lizenz-Verfahren bzw. Freigabe-Regeln realisiert werden.

Darüber hinaus kann anstelle der Software-Applikationen auch ein Garantie-Zertifikat als Gerätefunktionalität freigegeben werden, wodurch beispielsweise eine Garantie-Zeitpunkt für die erstmalige Inbetriebnahme des Endgeräts festgelegt werden kann.

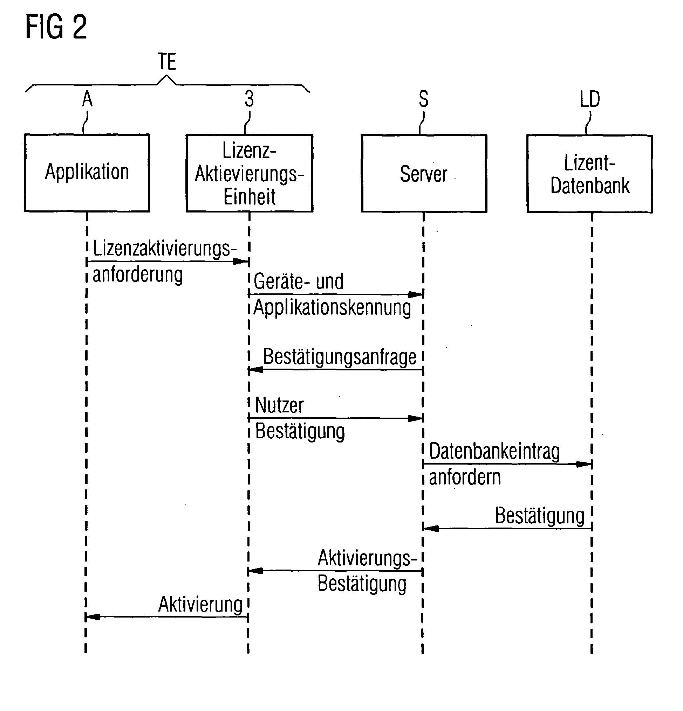

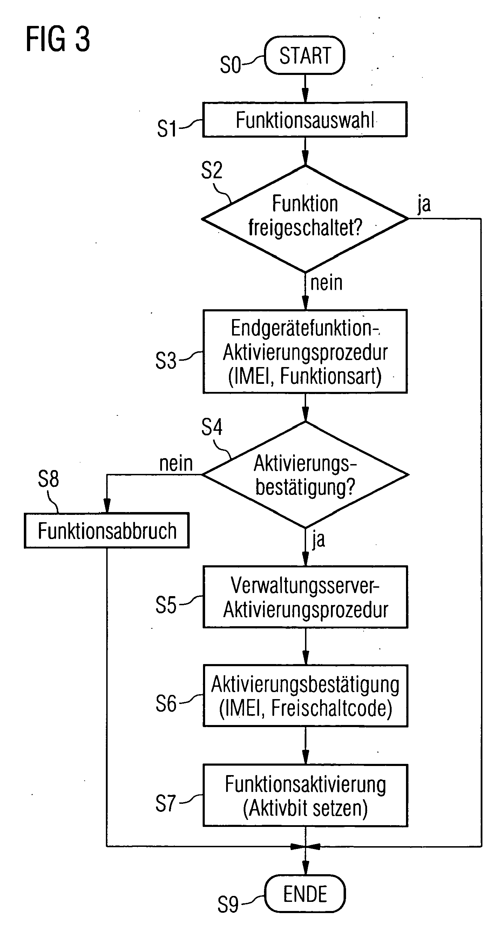

Zur Veranschaulichung des erfindungsgemäßen Verfahrens zur Lizenzierung von Endgerätefunktionalitäten werden nachfolgend wesentliche Verfahrensschritte anhand eines Statusdiagramms gemäß Figur 2 und darüber hinaus in einem Flussdiagramm gemäß Figur 3 beschrieben.

Figuren 2 und 3 zeigen ein vereinfachtes Statusdiagramm sowie ein zugehöriges Flussdiagramm zur Veranschaulichung der wesentlichen Schritte des Verfahrens zur Lizenzierung von Endgerätefunktionalitäten, wobei gleiche Bezugszeichen gleiche oder entsprechende Elemente wie in Figur 1 darstellen und auf eine wiederholte Beschreibung nachfolgend verzichtet wird.

Gemäß Figur 3 wird nach einem Start in Schritt S0 zunächst eine Funktionsauswahl in einem Schritt S1 getroffen, wobei beispielsweise über eine Menüstruktur aus einer Vielzahl von vorinstallierten Funktionalitäten bzw. Software-Applikationen ein entsprechendes "Icon" ausgewählt wird. In einem nachfolgenden Schritt S2 kann zunächst überprüft werden, ob die Funktionalität bereits freigeschaltet ist oder ob es sich noch um eine gesperrte, d.h. noch nicht freigegebene Funktionalität handelt. Ist die Funktionalität bereits freigeschaltet, so kann das Programm zum Schritt S9 verzweigen und die Routine beenden. Ist jedoch die Endgerätefunktionalität noch nicht freigeschaltet, so erfolgt in einem Schritt S3 eine Endgerätefunktionalitäts-Aktivierungsprozedur.

Gemäß Figur 2 wird hierbei von der Applikation A wie beispielsweise einem MP3-Player eine Lizenz-Aktivierungsanforderung an die Lizenz-Aktivierungseinheit 3 gegeben, die daraufhin eine Endgerätefunktionalitäts-Kennung erfasst und an den Lizenz-Verwaltungsserver S sendet. Genauer gesagt wird bei der Endgerätefunktionalitäts-Kennung beispielsweise eine Geräte- und Applikationskennung mittels verschlüsselter oder unverschlüsselter SMS-Nachricht über das Telekommunikationsnetzwerk N an den Lizenz-Verwaltungsserver S gesendet, wobei auch die vorstehend beschriebenen zusätzlichen Kontext-Kennungen wie beispielsweise eine Zeitpunkt-Kennung, eine Orts-Kennung, eine Netzbetreiber-Kennung oder weitere Kennungen erfasst und übertragen werden können.

Wieder zurückkehrend zu Figur 3 kann in einem weiteren Schritt S4 eine Aktivierungsbestätigung stattfinden, mit der beispielsweise die vorstehend beschriebenen Lizenzhinweise gelesen und bestätigt werden können. Hierbei kann z.B. der Lizenz-Verwaltungsserver S eine Bestätigungsanfrage an die Lizenz-Aktivierungseinheit 3 bzw. das zur Endgerätefunktionalitäts-Kennung zugehörige Telekommunikationsendgerät senden, welches beispielsweise durch den Benutzer bestätigt werden muss. Diese Nutzerbestätigung wird wiederum an den Lizenz-Verwaltungsserver S übertragen, um das Lizenzierungs-Verfahren fortzuführen. Wird in diesem Schritt S4 gemäß Figur 3 keine Aktivierungsbestätigung erhalten, so erfolgt in einem Schritt S8 ein Funktionsabbruch und das Verfahren endet wiederum im Schritt S9.

Wenn andererseits in der optionalen Aktivierungsbestätigung S4 eine Nutzer-Bestätigung abgegeben wurde und somit der Benutzer mit der Lizenzierung einverstanden ist, so wird in einem Schritt S5 eine Verwaltungsserver-Aktivierungsprozedur zum Eintragen der Endgerätefunktionalitäts-Kennung in die Lizenz-Datenbank LD durchgeführt. Genauer gesagt erfolgt hierbei gemäß Figur 2 eine Anforderung eines Datenbankeintrags für die empfangene Endgerätefunktionalitäts-Kennung, welche im einfachsten Fall automatisch von der Lizenz-Datenbank LD bestätigt wird. Im diesem Fall kann demzufolge lediglich ein Lizenzzähler um den Wert "1" für eine jeweilige Endgerätefunktionalitäts-Kennung erhöht werden, wobei dieser Eintrag automatisch von der Lizenz-Datenbank LD bestätigt wird.

Anschließend wird in einem Schritt S6 gemäß Figur 3 eine Aktivierungsbestätigung vom Lizenz-Verwaltungsserver S durchgeführt, wobei an das die Endgerätefunktionalitäts-Kennung sendende Telekommunikationsendgerät der Freischaltcode mittels SMS-Nachricht übertragen wird. Vorzugsweise wird diese Aktivierungsbestätigung in einer verschlüsselten Nachricht oder einem verschlüsselten Verfahren an das Telekommunikationsendgerät TE und dessen Lizenz-Aktivierungseinheit 3 übertragen. Zusätzlich kann hierbei auch die Geräteidentifikationsnummer IMEI zur Durchführung eines erweiterten Gegenchecks mit übertragen werden. In diesem Fall wird auch die Geräteidentifikationsnummer IMEI im Telekommunikationsendgerät überprüft, um eine an der Schnittstelle 1 durchgeführte Manipulation der Daten zu verhindern.

Abschließend wird in einem Schritt S7 die eigentliche Funktionsaktivierung durchgeführt, wobei die Lizenz-Aktivierungseinheit 3 nach Entschlüsselung und Dekodierung des Freischaltcodes sowie dem gegebenenfalls durchgeführten Gegencheck der Geräteidentifikationsnummer IMEI anschließend die entsprechende Funktionalität im Telekommunikationsendgerät freigibt bzw. aktiviert. Wie bereits vorstehend beschrieben wurde, kann diese Freigabe entweder dauerhaft oder zeitlich begrenzt sein, wobei auch eine benutzer- oder SIM-bezogene Freischaltung durchgeführt werden kann. Die Freischaltung wird vorzugsweise in einem gegenüber Fremdeinwirkung sicheren Speicherbereich wie beispielsweise einem gesicherten Datenfeld durchgeführt, der gegenüber Software-Updates resistent ist und darüber hinaus SIM-neutral ist. Vorzugsweise wird lediglich ein einziges Aktivierungsbit in einem gesicherten Datenfeld zur Freigabe der ausgewählten Endgerätefunktionalität gesetzt, wodurch man eine maximale Sicherheit gegenüber Manipulationen erhält und ein Speicherplatzbedarf minimal ist.

Die Erfindung wurde vorstehend anhand eines mobilen Telekommunikationsendgeräts beschrieben, welches über verschlüsselte SMS-Nachrichten Endgerätefunktionalitäts-Kennungen sendet und zugehörige Freischaltcodes empfängt. Sie ist jedoch nicht darauf beschränkt und umfasst in gleicher Weise auch alternative Telekommunikationsendgeräte und alternative Übertragungsverfahren, mit denen eine Endgerätefunktionalität sehr einfach und äußerst sicher freigeschaltet werden kann.

### Bezugszeichenliste

- 1: Kommunikationsschnittstelle
- 2: Datenverarbeitungseinheit
- 3: Lizenz-Aktivierungseinheit
- A: Applikationen
- TE: Telekommunikationsendgerät
- N: Telekommunikationsnetzwerk
- S: Lizenz-Verwaltungsserver
- LD: Lizenz-Datenbank
- S0 -: S9 Verfahrensschritte

## Patentansprüche

1. Verfahren zur Lizenzierung von Endgerätefunktionalitäten mit den Schritten:
a) Durchführen einer Auswahl (S1) von zumindest einer der vorinstallierten Endgerätefunktionalitäten (A);
b) Durchführen einer Endgerätefunktionalitäts-Aktivierungsprozedur (S3) zum Erfassen einer Endgerätefunktionalitäts-Kennung und zum Übertragen dieser Kennung an einen Lizenz-Verwaltungsserver (S);
c) Durchführen einer Verwaltungsserver-Aktivierungsprozedur (S5) zum Eintragen der Endgerätefunktionalitäts-Kennung in eine Lizenz-Datenbank (LD); und
d) Durchführen einer Freigabe der ausgewählten Endgerätefunktionalität auf der Grundlage der in die Lizenz-Datenbank (LD) eingegebenen Kennung.

2. Verfahren nach Patentanspruch 1,
**gekennzeichnet durch** den weiteren Schritt e) Durchführen einer Lizenz-Vergebührung auf der Grundlage der in die Lizenz-Datenbank (LD) eingegebenen Kennung.

3. Verfahren nach Patentanspruch 2,
**dadurch gekennzeichnet, dass** die Lizenz-Vergebührung gegenüber einem Endgerätebenutzer, Netzbetreiber, Endgerätehersteller und/oder Dienstanbieter durchgeführt wird.

4. Verfahren nach einem der Patentansprüche 1 bis 3,
**dadurch gekennzeichnet, dass** in Schritt b) als Endgerätefunktionalitäts-Kennung eine Endgerätekennung zum eindeutigen Identifizieren eines Endgeräts und eine Funktionalitäts-Kennung zum eindeutigen Identifizieren eines Funktionalitätstyps erfasst und übertragen wird.

5. Verfahren nach Patentanspruch 4,
**dadurch gekennzeichnet, dass** in Schritt b) ferner eine Kontext-Kennung zum eindeutigen Identifizieren von aktuellen Endgerätekontexten erfasst und an den Lizenz-Verwaltungsserver (S) übertragen wird.

6. Verfahren nach Patentanspruch 5,
**dadurch gekennzeichnet, dass** in Schritt b) eine Zeitpunkt-Kennung zum eindeutigen Identifizieren eines Auswahlzeitpunkts erfasst und übertragen wird.

7. Verfahren nach Patentanspruch 5 oder 6,
**dadurch gekennzeichnet, dass** eine Orts-Kennung zum eindeutigen Identifizieren eines Endgeräteortes erfasst und übertragen wird.

8. Verfahren nach einem der Patentansprüche 5 bis 7,
**dadurch gekennzeichnet, dass** eine Netzbetreiber-Kennung zum eindeutigen Identifizieren eines verwendeten Netzbetreibers erfasst und übertragen wird.

9. Verfahren nach einem der Patentansprüche 1 bis 8,
**dadurch gekennzeichnet, dass** in Schritt d) eine Endgeräte-Freischaltung (S6) zum Übertragen eines Freischaltcodes vom Lizenz-Verwaltungsserver (S) an ein ausgewähltes Endgerät (TE) und eine Funktionsaktivierung (S7) zum Aktivieren einer Endgerätefunktionalität auf der Grundlage des Freischaltcodes durchgeführt wird.

10. Verfahren nach Patentanspruch 9,
**dadurch gekennzeichnet, dass** der Freischaltcode mittels einer SMS-Nachricht, eines Sync_ML- oder WAP-Push-Verfahrens, oder einer proprietären Signalisierung des Systems übertragen wird.

11. Verfahren nach Patentanspruch 9 oder 10,
**dadurch gekennzeichnet, dass** der Freischaltcode verschlüsselt übertragen wird.

12. Verfahren nach einem der Patentansprüche 1 bis 11,
**dadurch gekennzeichnet, dass** die Freigabe der ausgewählten Endgerätefunktionalität durch Setzen eines Aktivierungsbits realisiert ist.

13. Verfahren nach Patentanspruch 12,
**dadurch gekennzeichnet, dass** das Aktivierungsbit in einem gesicherten Datenfeld innerhalb des Endgeräts abgelegt ist.

14. Verfahren nach einem der Patentansprüche 1 bis 13,
**dadurch gekennzeichnet, dass** die Endgerätefunktionalität eine Applikation (MP3, MPEG) und/oder ein Garantiezertifikat für ein Endgerät darstellt.

15. Telekommunikationsendgerät mit
einer Kommunikationsschnittstelle (1) zur Realisierung einer Anbindung an ein Telekommunikationsnetzwerk (N) mit einem Lizenz-Verwaltungsserver (S); und einer Datenverarbeitungseinheit (2) zur Realisierung einer Vielzahl von vorinstallierten Endgerätefunktionalitäten (MP3, MPEG),
**gekennzeichnet durch**
eine Lizenz-Aktivierungseinheit (3), die
für eine noch nicht freigegebene Endgerätefunktionalität eine Auswahl ermöglicht,
eine Endgerätefunktionalitäts-Kennung für die ausgewählte Funktionalität erfasst,
die Endgerätefunktionalitäts-Kennung über die Schnittstelle (1) und das Telekommunikationsnetzwerk (N) an den Lizenz-Verwaltungsserver (S) zum Durchführen eines Eintrags in eine Lizenz-Datenbank (LD) überträgt, und
die ausgewählte Funktionalität in Abhängigkeit von einem über den Lizenz-Verwaltungsserver (S), das Telekommunikationsnetzwerk (N) und die Schnittstelle (1) empfangenen Freischaltcode aktiviert.

16. Telekommunikationsendgerät nach Patentanspruch 15,
**dadurch gekennzeichnet, dass** die Lizenz-Aktivierungseinheit (3) als Endgerätefunktionalitäts-Kennung eine Endgeräte-Kennung zum eindeutigen Identifizieren eines Endgeräts und eine Funktionalitäts-Kennung zum eindeutigen Identifizieren eines Funktionalitätstyps erfasst und überträgt.

17. Telekommunikationsendgerät nach Patentanspruch 15 oder 16,
**dadurch gekennzeichnet, dass** die Lizenz-Aktivierungseinheit (3) eine Kontext-Kennung zum eindeutigen Identifizieren von aktuellen Endgeräte-Kontexten erfasst und an den Lizenz-Verwaltungsserver (S) überträgt.

18. Telekommunikationsendgerät nach Patentanspruch 17,
**dadurch gekennzeichnet, dass** die Lizenz-Aktivierungseinheit (3) eine Zeitpunkt-Kennung zum eindeutigen Identifizieren eines Auswahlzeitpunktes erfasst und überträgt.

19. Telekommunikationsendgerät nach Patentanspruch 17 oder 18,
**dadurch gekennzeichnet, dass** die Lizenz-Aktivierungseinheit (3) eine Orts-Kennung zum eindeutigen Identifizieren eines Endgeräteortes erfasst und überträgt.

20. Telekommunikationsendgerät nach einem der Patentansprüche 17 bis 19,
**dadurch gekennzeichnet, dass** die Lizenz-Aktivierungseinheit (3) eine Netzbetreiber-Kennung zum eindeutigen Identifizieren eines verwendeten Netzbetreibers erfasst und überträgt.

21. Telekommunikationsendgerät nach einem der Patentansprüche 15 bis 20,
**dadurch gekennzeichnet, dass** die Lizenz-Aktivierungseinheit (3) die Endgerätefunktionalitäts-Kennung mittels einer SMS-Nachricht, eines Sync_ML- oder WAP-Push-Verfahrens, oder einer proprietären Signalisierung des Systems überträgt.

22. Telekommunikationsendgerät nach einem der Patentansprüche 15 bis 21,
**dadurch gekennzeichnet, dass** die Lizenz-Aktivierungseinheit (3) eine Entschlüsselung des empfangenen Freischaltcodes durchführt.

23. Telekommunikationsendgerät nach einem der Patentansprüche 15 bis 22,
**dadurch gekennzeichnet, dass** die Lizenz-Aktivierungseinheit (3) eine Verschlüsselung der Endgerätefunktionalitäts-Kennung durchführt.

24. Telekommunikationsendgerät nach einem der Patentansprüche 15 bis 23,
**dadurch gekennzeichnet, dass** die Lizenz-Aktivierungseinheit (3) die Freigabe der ausgewählten Endgerätefunktionalität durch Setzen eines Aktivierungsbits auf der Grundlage des empfangenen Freischaltcodes realisiert.

25. Telekommunikationsendgerät nach Patentanspruch 24,
**dadurch gekennzeichnet, dass** die Lizenz-Aktivierungseinheit (3) das Aktivierungsbit in einem gesicherten Datenfeld setzt.

26. Telekommunikationsendgerät nach einem der Patentansprüche 15 bis 25,
**dadurch gekennzeichnet, dass** die Endgerätefunktionalität eine Applikation (MP3, MPEG) und/oder ein Garantiezertifikat für ein Endgerät darstellt.

27. Telekommunikationsendgerät nach einem der Patentansprüche 15 bis 26,
**dadurch gekennzeichnet, dass** es ein mobiles Telekommunikationsendgerät, insbesondere ein Handy, Schnurlos-Telefon oder Smartphone, darstellt.

28. Telekommunikationsendgerät nach einem der Patentansprüche 15 bis 26,
**dadurch gekennzeichnet, dass** es ein ortsfestes Endgerät, insbesondere eine Settop-Box zur drahtlosen bzw. drahtgebundenen Kommunikation oder ein anderes drahtgebundenes Endgerät, darstellt.

29. Telekommunikationssystem zur Realisierung eines Verfahrens zur Lizenzierung von Endgerätefunktionalitäten nach einem der Patentansprüche 1 bis 14 mit
zumindest einem Telekommunikationsendgerät (TE),
einem Telekommunikationsnetzwerk (N),
einem Lizenz-Verwaltungsserver (S), und
einer Lizenz-Datenbank (LD).

30. Telekommunikationssystem nach Patentanspruch 29, **dadurch gekennzeichnet, dass** das zumindest eine Telekommunikationsendgerät (TE) nach einem der Patentansprüche 15 bis 28 ausgebildet ist.
